# EUROPÄISCHE PATENTANMELDUNG

(11) **EP 2 888 953 A2**
(43) Veröffentlichungstag der Anmeldung: **01.07.2015**
(21) Anmeldenummer: 14191482.0
(22) Anmeldetag: 03.11.2014
(51) Int. Cl.: A24C 5/18, F16G 3/10

(54) **Saugband einer Maschine der Tabak verarbeitenden Industrie**

(30) Priorität: 15.11.2013 DE 102013223308
(71) Anmelder: HAUNI Maschinenbau AG, 21033 Hamburg (DE)
(72) Erfinder: Van Hove, Derk, 21035 Hamburg (DE); Svensson, Christian, 21423 Winsen (DE)
(74) Vertreter: Seemann & Partner

(57) **Zusammenfassung**

Die Erfindung betrifft u.a. ein Verfahren zum Herstellen eines Saugbands (2) einer Maschine der Tabak verarbeitenden Industrie, insbesondere Strangmaschine, weiter vorzugsweise Filterstrangmaschine, wobei ein Saugband (2) vorbestimmter Länge mit Längsfäden (40, 40.1 bis 40.7) und mit an den Längsfäden (40, 40.1 bis 40.7) angeordneten, vorzugsweise separaten, Querstegen (42) und mit zwei freien Saugbandenden (52.1, 52.2) bereitgestellt wird, wobei die Längsfäden (40, 40.1 bis 40.7) des Saugbands (2) nebeneinander, vorzugsweise parallel nebeneinander, in Längsrichtung (112) angeordnet sind und die, insbesondere blockartigen, Querstege (42) quer, insbesondere senkrecht, zur Längsrichtung (112) der Längsfäden (40, 40.1 bis 40.7) in der durch die Längsfäden (40, 40.1 bis 40.7) gebildeten Ebene angeordnet sind, wobei die Querstege (42) jeweils mit mehreren Längsfäden (40, 40.1 bis 40.7) wirkverbunden, insbesondere kraftschlüssig und/oder formschlüssig verbunden, sind.

Das Verfahren zeichnet sich dadurch aus, dass in einem Verbindungsbereich der Saugbandenden (52.1, 52.2) die Längsfäden (40, 40.1 bis 40.7) aufweisenden Saugbandenden (52.1, 52.2) querstegfrei gegenüberliegend und in Längsrichtung (112) des Saugbands (2) hintereinander, vorzugsweise fluchtend, ausgerichtet sind oder werden, und vorzugsweise in Längsrichtung versetzt sind, so dass die Enden der einander gegenüberliegenden Längsfäden (40, 40.1 bis 40.7) jeweils einen Längsfadenendenbereich (54.1 bis 54.7) bilden, und wobei die jeweils einander gegenüberliegenden Enden der Längsfäden (40, 40.1 bis 40.7) des Längsfadenendenbereich (54.1 bis 54.7) oder der Längsfadenendenbereiche (54.1 bis 54.7) paarweise mittels wenigstens eines oder mehrerer auszubildenden oder ausgebildeten Querstege (42) miteinander verbunden werden.

## Beschreibung

Die Erfindung betrifft ein Verfahren zum Herstellen eines Saugbands einer Maschine der Tabak verarbeitenden Industrie, insbesondere Strangmaschine, weiter vorzugsweise Filterstrangmaschine, wobei ein Saugband vorbestimmter Länge mit Längsfäden und mit an den Längsfäden angeordneten, vorzugsweise separaten, Querstegen und mit zwei freien Saugbandenden bereitgestellt wird, wobei die Längsfäden des Saugbands nebeneinander, vorzugsweise paarweise parallel nebeneinander, in Längsrichtung angeordnet sind und die, insbesondere blockartigen, Querstege quer, insbesondere senkrecht, zur Längsrichtung der Längsfäden in der durch die Längsfäden gebildeten Ebene angeordnet sind, wobei die Querstege jeweils mit mehreren Längsfäden wirkverbunden, insbesondere kraftschlüssig und/oder formschlüssig verbunden, sind.

Ferner betrifft die Erfindung ein Saugband eines Saugstrangförderers einer Maschine der Tabak verarbeitenden Industrie, insbesondere Strangmaschine, weiter vorzugsweise Filterstrangmaschine, wobei das Saugband in Längsrichtung Längsfäden aufweist, wobei an den Längsfäden quer, insbesondere senkrecht, zur Längsrichtung des Saugbands, vorzugsweise separate, Querstege vorgesehen sind, wobei die Längsfäden des Saugbands nebeneinander, vorzugsweise parallel nebeneinander, in Längsrichtung angeordnet sind und die, insbesondere blockartigen, Querstege quer, insbesondere senkrecht, zur Längsrichtung der Längsfäden in der durch die Längsfäden gebildeten Ebene angeordnet sind, wobei die Querstege jeweils mit mehreren Längsfäden, insbesondere kraftschlüssig, verbunden sind, und wobei das Saugband als geschlossenes, endloses Saugband ausgebildet ist.

Aus DE 36 27 057 A1 sind beispielsweise ein Verfahren und eine Vorrichtung zum Herstellen eines Tabakstrangs bekannt. Die Vorrichtung zur Herstellung eines Tabakstrangs für die Herstellung eines Zigarettenstrangs bildet einen ein umlaufendes, endloses Saugband umfassenden Strangförderer, der eine Strangaufbauzone durchläuft, wobei der Strangförderer in der Strangaufbauzone zur Strangbildung mit Fasern beschickbar ist. Außerdem weist der Strangförderer ein Abgabeende zum Abgeben des Faserstrangs auf.

Das verwendete Saugband des Saugstrangförderers ist in einem Tabakkanal geführt und rückseitig einer Unterdruckkammer zugeordnet, die mit einer Unterdruckquelle verbunden ist und durch einen luftdurchlässigen Kanalboden sowie durch das luftdurchlässige Saugband einen Saugzug bewirkt.

Im Aufschauerbereich bzw. in der Strangaufbauzone werden Tabakfasern auf das Saugband von unten aufgeschauert und durch den Saugzug am Saugband gehalten. Zum Ablösen des Tabakstrangs von dem Saugband ist stromabwärts des Abgabeendes des Saugbands bzw. des Tabakkanals ein Abnehmer, z.B. ein Schaber, vorgesehen, der mit einem Einlauffinger verbunden ist, der dafür sorgt, dass der vorgeformt gebildete Tabakstrang in das sich anschliessende Format eingebracht wird.

Zur Herstellung eines Tabakstrangs in einer Zigarettenstrangmaschine werden in einem Verteiler ausgebreitete Tabakfasern von unten auf das umlaufende, mit Unterdruck beaufschlagte Saugband des Saugstrangförderers aufgeschauert. Das Saugband ist luftdurchlässig ausgebildet und wird mit Saugluft versorgt. Die durch das Saugband zur Unterdruckkammer hindurchtretende Luftströmung führt die Tabakfasern aus einem Tabakschauer zum Saugband hin und hält sie hängend am Saugband fest, bis sie als Faserstrang am Formateinlauf der Maschine auf einen Hüllmaterialstreifen (Zigarettenpapierstreifen) abgelegt werden.

Darüber hinaus ist in DE 35 38 928 A1 ein Förderband zum Fördern eines Tabakstrangs beschrieben. Ferner ist in DE 1 932 616 A ein gewebtes poröses Band für Zigarettenmaschinen beschrieben.

Darüber hinaus ist in WO 2013/102617 A1 ein Saugband einer Maschine der Tabak verarbeitenden Industrie offenbart, wobei das Saugband in Längsrichtung nebeneinander angeordnete Längsfäden aufweist und an den Längsfäden senkrecht zur Längsrichtung des Saugbands angeordnete blockartige Querstege angeordnet sind.

Ausgehend von diesem Stand der Technik besteht die Aufgabe der Erfindung darin, ein aus Längsfäden und an den Längsfäden angeordnete Querstege ausgebildetes Saugband bereitzustellen, wobei die Verbindung von Saugbandenden des Saugbands verbessert sein soll, um die Nutzungsdauer des Saugbands zu verlängern und um die Festigkeit der Verbindung der Saugbandenden zu erhöhen.

Gelöst wird diese Aufgabe durch ein Verfahren zum Herstellen eines Saugbands einer Maschine der Tabak verarbeitenden Industrie, insbesondere Strangmaschine, weiter vorzugsweise Filterstrangmaschine, wobei ein Saugband vorbestimmter Länge mit Längsfäden und mit an den Längsfäden angeordneten, vorzugsweise separaten, Querstegen und mit zwei freien Saugbandenden bereitgestellt wird, wobei die Längsfäden des Saugbands nebeneinander, vorzugsweise parallel nebeneinander, in Längsrichtung angeordnet sind und die, insbesondere blockartigen, Querstege quer, insbesondere senkrecht, zur Längsrichtung der Längsfäden in der durch die Längsfäden gebildeten Ebene angeordnet sind, wobei die Querstege jeweils mit mehreren Längsfäden wirkverbunden, insbesondere kraftschlüssig und/oder formschlüssig, verbunden, sind, das dadurch weitergebildet wird, dass in einem Verbindungsbereich der Saugbandenden die Längsfäden aufweisenden Saugbandenden querstegfrei gegenüberliegend und in Längsrichtung des Saugbands hintereinander, vorzugsweise fluchtend, ausgerichtet sind oder werden, und vorzugsweise in Längsrichtung versetzt sind, so dass die Enden der einander gegenüberliegenden Längsfäden jeweils einen Längsfadenendenbereich bilden, und wobei die jeweils einander gegenüberliegenden Enden der Längsfäden des Längsfadenendenbereichs oder der Längsfadenendenbereiche paarweise mittels wenigstens eines oder mehrerer auszubildenden oder ausgebildeten Querstege miteinander verbunden werden.

Die Erfindung beruht auf dem Gedanken, dass zur Bildung eines geschlossenen Saugbands die freien Enden der Längsfäden gegenüberliegend und fluchtend zueinander, vorzugsweise in einem Spritzwerkzeug oder dergleichen, zur Verbindung der Saugbandenden angeordnet werden, so dass die freien Enden in einem vorbestimmten Abstand zueinander gegenüberliegend beispielsweise in einem Spritzwerkzeug angeordnet sind und anschließend durch Einbringen einer flüssigen Kunststoffmasse in die geschlossene Form des Spritzwerkzeugs die Querstege ausgebildet werden, wobei die Querstege im Verbindungsbereich der Saugbandenden jeweils eine oder mehrere Längsfadenendenbereiche aufnehmen, so dass die Längsfadenendenbereiche im Inneren des Querstegs oder der Querstege angeordnet sind, wodurch die Saugbandenden miteinander verbunden werden. Dadurch wird ein in sich geschlossenes und endloses bzw. quasi-endloses Saugband hergestellt.

Somit wird ein gewebefreies, d.h. kettfäden- oder schussfädenfreies Saugband eines Saugstrangförderers an der Maschine der Tabak verarbeitenden Industrie bereitgestellt, wobei auch im Verbindungsbereich der Saugbandenden das Saugband blockweise oder blockartig separate Querstege oder separate Segmentblöcke (als Querstege) aufweist, so dass die Querstege bezogen auf die Längsrichtung bzw. Förderrichtung des Saugbands hintereinander angeordnet sind. Insbesondere sind hierbei die Längsfäden in einer Ebene bzw. in einer Monolage parallel auch im Verbindungsbereich der Saugbandenden nebeneinander angeordnet.

Die Querstege im Verbindungsbereich der Saugbandenden werden durch Einbringen von einer fließfähigen Masse, insbesondere Kunststoff, durch Einbringen in eine Spitzgussform und nach Aushärten der fließfähigen Masse gebildet. Hierbei sind die separaten sowie formstabilen Querstege mit den Längsfäden des Saugbands, insbesondere kraftschlüssig und/oder formschlüssig, verbunden, weil die Querstege mit mehreren nebeneinander angeordneten, vorzugsweise monolagig und parallel angeordneten, Längsfäden über die Breite des Saugbandes verbunden sind. Die blockartigen Querstege sind hierbei einzeln in Längsrichtung des Saugbandes hintereinander und voneinander beabstandet angeordnet, so dass ein wabenstrukturfreies Saugband, d.h. ein Saugband ohne Wabenstruktur, ausgebildet wird. Aufgrund der Anordnung der Querstege an den monolagig angeordneten Längsfäden ist es möglich, dass ein Saugband mit einer kammartigen Struktur in Längsrichtung ausgebildet wird.

Durch die formstabilen, vorzugsweise nicht-biegbaren, Querstege, die mit den Längsfäden wirkverbunden sind, wird eine hohe bzw. höhere Quersteifigkeit im Vergleich zur Steifigkeit in Längsrichtung erreicht, da das Band in Längsrichtung aufgrund der biegbaren Längsfäden flexibel bzw. flexibler als in Querrichtung ist.

Insbesondere sind die Querstege sowohl im Verbindungsbereich der Saugbandenden als auch außerhalb des Verbindungsbereichs der Saugbandenden kraftschlüssig und/oder formschlüssig mit den Längsfäden des Saugbands verbunden. In einer weiteren Ausführungsform ist es weiterhin denkbar, dass die Querstege mit den Längsfäden stoffschlüssig verbunden sind.

Die Querstege sind vorzugsweise als separate, insbesondere blockartige, Segmentkörper in Längsrichtung des Saugbands hintereinander angeordnet, wobei die Querstege parallel und/oder in vorbestimmten Abständen zueinander angeordnet sind. Hierbei ist weiterhin vorgesehen, dass die Längsfäden des Saugbands parallel zueinander angeordnet sind, wobei im Verbindungsbereich der beiden Saugbandenden die Enden eines Längsfadens jeweils gegenüberliegend voneinander angeordnet sind.

Insbesondere sind die Längsfäden des Saugbandes als monofile Fäden oder als multifile Fäden, zum Beispiel in einer Monolage, ausgebildet, wodurch eine hohe Biegewechselfestigkeit des Saugbands erreicht wird. Dabei sind vorzugsweise die Längsfäden aus Kunststoff und/oder aus Metall hergestellt. Beispielsweise ist hierbei vorgesehen, dass ein Längsfaden aus mehreren Filamentfäden, beispielsweise aus Metall oder Stahl, gebildet wird oder ist, wodurch eine hohe Zugfestigkeit des Saugbands erreicht wird. Dabei ist im Rahmen der Erfindung ebenfalls vorgesehen, dass die Längsfäden jeweils aus mehreren miteinander verzwirnten oder verdrehten Stahlgarnen (als Monofilamente) zu einem Multifilamentfaden ausgebildet sind oder werden, wodurch die Längsfäden jeweils als Multifilamente bereitgestellt werden. Die vorzugsweise monolagig angeordneten Längsfäden sind voneinander quer zur Längserstreckung bzw. Längsrichtung des Saugbands voneinander beabstandet.

Darüber hinaus ist vorteilhafterweise für das Saugband vorgesehen, dass die Querstege auch für den Verbindungsbereich aus Kunststoff und/oder aus Metall hergestellt sind.

Als geeignete Kunststoffe für die Längsfäden sowie für die Querstege eignen sich beispielsweise Kunststoffe, wie Polyethylen (PE), Polyetherketone (PEEK), Polypropylen (PP), Polyurethan (PU), ultrahochmolekulares Polyethylen (PE-UHMW) (Ultra High Molecular Weight) sowie Vectran usw. Bevorzugterweise ist bei einem erfindungsgemäßen Saugband vorgesehen, dass die Längsfäden und Querstege aus unterschiedlichen Materialien hergestellt sind. Beispielsweise wird ein Saugband unter Verwendung von aus Stahlgarnen oder aus Metall hergestellten Längsfäden und aus Kunststoff hergestellten Querstegen bereitgestellt.

Bevorzugterweise werden zur Herstellung des Saugbands die Längsfäden von den Querstegen umspritzt. Hierzu werden die Längsfäden in einem Spritzwerkzeug angeordnet, so dass anschließend eine fließfähige Masse, zum Beispiel Kunststoff, in die Spritzgussform eingebracht wird, so dass nach Erkalten der fließfähigen Masse die Querstege die Längsfäden umschließen.

Vorzugsweise ist das Saugband quer zur Längsrichtung steifer als in Längsrichtung des Saugbands ausgebildet, da durch die nockenartigen bzw. rippenartigen Querstege eine Querversteifung erreicht wird, da die Querstege steifer als die Längsfäden des Saugbands sind.

Bei der Herstellung der Verbindung der Saugbandenden werden die Längsfäden parallel nebeneinander an beiden Enden ausgerichtet, wobei die Enden der Längsfäden vorzugsweise fluchtend gegenüber voneinander angeordnet sind. Anschließend wird in einem Spritzwerkzeug der ausgebildete Längsfadenendenbereich mittels einer Formmasse, zum Beispiel aus Kunststoff, umspritzt, so dass nach Aushärten der Formmasse die Enden der Längsfäden bzw. der Längsfadenendenbereiche von den Querstegen umspritzt sind.

Vorzugsweise sind die Abstände der einander gegenüberliegenden Enden der Längsfäden eines Saugbands im jeweiligen Längsfadenendenbereich äquidistant bzw. konstant.

Dazu ist in einer Ausgestaltung des Verfahren vorgesehen, dass die Enden der einander gegenüberliegenden Längsfäden im Längsfadenendenbereich jeweils eine Längsfadennahtstelle bilden, und wobei die jeweils einander gegenüberliegenden Enden der Längsfäden der Längsfadennahtstelle oder der Längsfadennahtstellen paarweise mittels wenigstens eines oder mehrerer auszubildenden oder ausgebildeten Querstege miteinander verbunden werden, und wobei bei der Ausbildung des Querstegs oder der Querstege die jeweils einander gegenüberliegenden freien Enden der Längsfäden, insbesondere jeweils eines Längsfadens, im Quersteg oder in den Querstegen aufgenommen sind oder werden.

Darüber hinaus ist in einer Ausführung des Verfahrens weiterhin vorgesehen, dass nach der Ausbildung eines Querstegs im Verbindungsbereich der Saugbandenden mehrere Längsfadenendenbereiche, insbesondere mehrere Längsfadennahtstellen, mit jeweils einander gegenüberliegenden Enden der Längsfäden durch den ausgebildeten Quersteg aufgenommen sind.

Dazu ist weiterhin vorgesehen, dass nach der Ausbildung von mehreren, in Längsrichtung des Saugbands voneinander beabstandeten Querstegen im Verbindungsbereich der Saugbandenden jeweils wenigstens ein Längsfadenendenbereich, insbesondere eine Längsfadennahtstelle, oder mehrere Längsfadenendenbereiche, insbesondere mehrere Längsfadennahtstellen, durch die ausgebildeten Querstege aufgenommen sind. Im Rahmen der Erfindung ist dabei in einem Aspekt vorgesehen, dass nicht alle Längsfadenendenbereiche durch einen einzigen auszubildenden oder ausgebildeten Quersteg aufgenommen werden. Vielmehr ist im Rahmen der Erfindung ebenfalls vorgesehen, dass die Enden der Längsfäden von mehreren Längsfadenendenbereichen von wenigstens zwei oder mehr Querstegen aufgenommen werden. Beispielsweise ist es im Rahmen der Erfindung möglich, dass bei einer symmetrischen Anordnung der Längsfadenendenbereiche, zum Beispiel bei einer V-förmigen Anordnung der Längsfadenendenbereiche in Längsrichtung, die symmetrisch zueinander angeordneten Nahtstellen von jeweils einem Quersteg aufgenommen werden.

Dazu ist weiterhin in einer bevorzugten Ausführungsform des Verfahrens vorgesehen, dass nach der Ausbildung von mehreren Querstegen im Verbindungsbereich der Saugbandenden ein Längsfadenendenbereich, insbesondere eine Längsfadennahtstelle, durch jeweils einen ausgebildeten Quersteg aufgenommen ist. Hierbei ist im Verbindungsbereich der Saugbandenden jeweils ein Längsfadenendenbereich mit jeweils zwei gegenüber voneinander liegenden Enden eines Längsfadens im Quersteg aufgenommen bzw. von diesem umgeben. Hierbei entspricht die Anzahl der Längsfadenendenbereiche der Anzahl der zur Ausbildung eines geschlossenen Saugbandes vorgesehenen Querstege, da pro Längsfadenendenbereich (mit jeweils zwei Längsfadenenden) bzw. Längsfadennahtstelle jeweils ein Quersteg ausgebildet wird.

Überdies zeichnet sich das Verfahren weiterhin dadurch aus, dass für die Verbindung der beiden Saugbandenden die Längsfadenendenbereiche, insbesondere Längsfadennahtstellen, in Bezug auf die Längsrichtung des Saugbands wenigstens zwei oder mehr als zwei Längsfadenendenbereiche, insbesondere Längsfadennahtstellen, gestaffelt hintereinander angeordnet sind und/oder wenigstens mehr als zwei Längsfadenendenbereiche, insbesondere mehr als zwei Längsfadennahtstellen, vorzugsweise in Längsrichtung des Saugbands oder quer zur Längsrichtung des Saugbands, zickzack-förmig oder, vorzugsweise in Längsrichtung des Saugbands, V-förmig oder als Diagonale oder asymmetrisch zueinander angeordnet sind oder werden.

Überdies ist es in einer Weiterbildung des Verfahrens bevorzugt, dass für die Verbindung der Saugbandenden wenigstens zwei Längsfadenendenbereiche, insbesondere wenigstens zwei Längsfadennahtstellen, in Längsrichtung des Saugbands in einem Endenbereichabstand, insbesondere Nahtstellenabstand, hintereinander angeordnet sind, wobei der Endenbereichabstand, insbesondere Nahtstellenabstand, dem einfachen Abstand von zwei benachbarten Querstegen, vorzugsweise außerhalb des Verbindungsbereichs, oder einem n-fachen Abstand (n = 2, 3, 4, ...) von zwei benachbarten Querstegen, vorzugsweise außerhalb des Verbindungsbereichs, entspricht.

Dadurch, dass die Längsfadenendenbereiche, insbesondere Längsfadennahtstellen, in Längsrichtung des Saugbandes hintereinander angeordnet sind, ergibt sich ein vergrößerter Verbindungsbereich, da die Querstege zur Verbindung der Enden der Längsfadenendenbereiche ebenfalls hintereinander angeordnet sind. Durch die Beabstandung der Längsfadenendenbereiche wird die Reißfestigkeit des Saugbandes in Längsrichtung signifikant erhöht, da beispielsweise nur eine oder zwei Längsfadenendenbereiche von einem Quersteg aufgenommen sind, während in einem vorbestimmten Abstand zu diesem Quersteg ein weiterer Quersteg vorgesehen ist, um eine oder zwei Längsfadenendenbereiche aufzunehmen.

Weist beispielsweise ein erfindungsgemäßes Saugband fünf oder sieben Längsfäden auf, so ist es im Rahmen der Erfindung vorgesehen, dass im Verbindungsbereich der Saugbandenden beispielsweise fünf oder sieben Querstege ausgebildet werden, wobei jeweils ein Längsfadenendenbereich mit zwei einander gegenüberliegenden Enden eines Längsfadens von einem Quersteg aufgenommen ist und wobei die neben dem Längsfadenendenbereich parallel verlaufenden Längsfäden vom jeweiligen Quersteg umspritzt sind. Dadurch ist es beispielsweise möglich, dass die Länge des Verbindungsbereichs der Saugbandenden mit fünf oder sieben Längsfadenendenbereichen, insbesondere Längsfadennahtstellen, mindestens einem Abstand von fünf bzw. sieben Querstegen in Längsrichtung entspricht.

Im Rahmen der Erfindung ist außerdem vorgesehen, dass beispielsweise zwischen zwei jeweils einen Längsfadenendenbereich aufnehmenden Querstegen weitere Querstege angeordnet sind, die mit allen Längsfäden im Verbindungsbereich verbunden sind.

Durch die Ausführung der voranstehend beschriebenen Verfahrensschritte ist ein geschlossenes sowie endloses Saugband erhältlich, wobei die Längsfadenendenbereiche, insbesondere Längsfadennahtstellen, von mehreren Querstegen im Verbindungsbereich der Saugbandenden aufgenommen sind.

Gemäß einer weiteren bevorzugten Ausführungsform zeichnet sich das Verfahren dadurch aus, dass in einem Verbindungsbereich der Saugbandenden die Längsfäden aufweisenden Saugbandenden querstegfrei gegenüberliegend und in Längsrichtung des Saugbands hintereinander, vorzugsweise fluchtend, ausgerichtet sind oder werden, und vorzugsweise in Längsrichtung versetzt sind, so dass die Enden der einander gegenüberliegenden Längsfäden jeweils einen Längsfadenendenbereich bilden, und wobei die Längsfadenbereiche von zwei benachbarten Längsfäden in Längsrichtung versetzt angeordnet sind, wobei in Längsrichtung des Saugbands zwischen zwei auszubildenden oder ausgebildeten Querstegen jeweils ein Längsfadenendenbereich eines ersten Längsfadens aufgenommen wird oder ist, und wobei die zum Längsfadenendenbereich des ersten Längsfadens benachbarten Querstege mit jeweils wenigstens einem weiteren, vorzugsweise im Bereich des Längsfadenendenbereichs des ersten Längsfadens unterbrechungsfreien, benachbarten Längsfaden verbunden sind. Bei dieser Ausgestaltung ist vorgesehen, dass die freien Enden der Längsfäden im jeweiligen Längsfadenendenbereich nicht durch die Querstege aufgenommen werden, so dass die freien Enden der Längsfäden nicht direkt im Quersteg angeordnet sind oder nicht direkt mit einem Quersteg miteinander verbunden sind bzw. werden. Hierbei sind die Enden des Längsfadens eines Längsfadenbereichs jeweils mit einem Quersteg verbunden, wobei die Querstege mit benachbarten, parallel angeordneten Längsfäden verbunden sind, so dass die freien Enden des Längsfadenendenbereichs zwischen den Querstegen angeordnet sind, wodurch die Zugkräfte bei Gebrauch des Saugbands über eine oder mehrere Querstege vom Längsfadenendenbereich auf die parallel zum Längsfaden mit den freien Enden vorgesehenen sowie verlaufenden, durchgängigen Längsfäden, die mit den Querstegen für die freien Enden verbunden sind, verteilt werden oder sind.

Darüber hinaus wird die Aufgabe gelöst durch ein Saugband eines Saugstrangförderers einer Maschine der Tabak verarbeitenden Industrie, insbesondere Strangmaschine, weiter vorzugsweise Filterstrangmaschine, wobei das Saugband in Längsrichtung Längsfäden aufweist, wobei an den Längsfäden quer, insbesondere senkrecht, zur Längsrichtung des Saugbands, vorzugsweise separate, Querstege vorgesehen sind, wobei die Längsfäden des Saugbands nebeneinander, vorzugsweise parallel nebeneinander, in Längsrichtung angeordnet sind und die, insbesondere blockartigen, Querstege quer, insbesondere senkrecht, zur Längsrichtung der Längsfäden in der durch die Längsfäden gebildeten Ebene bzw. Monolage angeordnet sind, wobei die Querstege jeweils mit mehreren Längsfäden, insbesondere kraftschlüssig und/oder formschlüssig, verbunden sind, und wobei das Saugband als geschlossenes Saugband ausgebildet ist, das dadurch weitergebildet wird, dass in einem Verbindungsbereich die Längsfäden in Längsrichtung des Saugbands hintereinander, vorzugsweise paarweise fluchtend, ausgerichtet sind, so dass die einander gegenüberliegenden Enden der Längsfäden jeweils einen Längsfadenendenbereich bilden, und wobei die jeweils einander gegenüberliegenden Enden der Längsfäden der Längsfadenendenbereiche paarweise mittels eines ausgebildeten Querstegs oder mehrerer ausgebildeter Querstege miteinander verbunden sind.

Dazu ist in einer Ausgestaltung des Saugbands vorgesehen, dass die Enden der einander gegenüberliegenden Längsfäden im Längsfadenendenbereich jeweils eine Längsfadennahtstelle bilden, und wobei die jeweils einander gegenüberliegenden Enden der Längsfäden der Längsfadennahtstelle oder der Längsfadennahtstellen paarweise mittels wenigstens eines oder mehrerer auszubildenden oder ausgebildeten Querstege miteinander verbunden sind, und wobei bei der Ausbildung des Querstegs oder der Querstege die jeweils einander gegenüberliegenden freien Enden der Längsfäden, insbesondere jeweils eines Längsfadens, im Quersteg oder in den Querstegen aufgenommen sind.

Ferner zeichnet sich das Saugband dadurch aus, dass im Verbindungsbereich der Saugbandenden mehrere Längsfadenendenbereiche, insbesondere Längsfadennahtstellen, durch den Quersteg aufgenommen sind.

Dazu ist in einer bevorzugten Weiterbildung außerdem vorgesehen, dass in Längsrichtung des Saugbands voneinander beabstandete Querstege jeweils wenigstens ein Längsfadenendenbereich, insbesondere wenigstens eine Längsfadennahtstelle, mit jeweils einander gegenüberliegenden Enden der Längsfäden oder mehrere Längsfadenendenbereiche, insbesondere Längsfadennahtstellen, durch die Querstege aufgenommen sind.

Dabei ist es bei dem Saugband ferner bevorzugt, dass in Längsrichtung des Saugbands voneinander beabstandete Querstege jeweils ein Längsfadenendenbereich, insbesondere eine Längsfadennahtstelle, oder mehrere Längsfadenendenbereiche, insbesondere Längsfadennahtstellen, durch die Querstege im Verbindungsbereich aufgenommen sind.

Vorzugsweise ist außerdem im Verbindungsbereich der Saugbandenden jeweils ein Längsfadenendenbereich, insbesondere eine Längsfadennahtstelle, mit jeweils einander gegenüberliegenden Enden der Längsfäden durch einen Quersteg aufgenommen, wobei der die jeweils eine Längsfadennahtstelle aufnehmende Quersteg mit weiteren neben der Längsfadennahtstelle angeordneten Längsfäden verbunden ist.

Darüber hinaus zeichnet sich eine Ausführungsform des Saugbands dadurch aus, dass im Verbindungsbereich der beiden Saugbandenden die Längsfadenendenbereiche, insbesondere die Längsfadennahtstellen, in Bezug auf die Längsrichtung des Saugbands wenigstens zwei oder mehr als zwei Längsfadenendenbereiche, insbesondere Längsfadennahtstellen, gestaffelt hintereinander angeordnet sind oder wenigstens mehr als zwei Längsfadennahtstellen, vorzugsweise in Längsrichtung des Saugbands oder quer zur Längsrichtung des Saugbands, zickzack-förmig oder, vorzugsweise in Längsrichtung des Saugbands, V-förmig oder als Diagonale oder asymmetrisch zueinander angeordnet sind.

Dabei ist weiterhin bei dem Saugband bevorzugterweise vorgesehen, dass zwei Längsfadenendenbereiche, insbesondere zwei Längsfadennahtstellen, in Längsrichtung des Saugbands in einem Endenbereichabstand, insbesondere Nahtstellenabstand, hintereinander angeordnet sind, wobei der Endenbereichabstand, insbesondere Nahtstellenabstand, der Längsfadenendenbereiche dem einfachen Abstand von zwei benachbarten, vorzugsweise außerhalb des Verbindungsbereichs, angeordneten Querstegen oder einem n-fachen Abstand (n = 2, 3, 4, ...) von zwei benachbarten Querstegen entspricht. Vorzugsweise sind die Querstege im Verbindungsbereich der Enden des Saugbands in regelmäßigen und äquidistanten Abständen ausgebildet, wobei insbesondere die Abstände der Querstege im Verbindungsbereich der beiden Saugbandenden und die Abstände der Querstege außerhalb des Verbindungsbereichs gleich oder annähernd gleich sind. Ferner sind vorzugsweise bezogen auf die Längsrichtung des Saugbands die Abstände der Längsfadenendenbereiche, die auch als Endenbereichabstände bezeichnet werden, regelmäßig angeordnet. Außerdem ist bei einer bevorzugten Ausgestaltung der Längsfadenendenbereiche vorgesehen, dass der Abstand von zwei, in Längsrichtung des Saugbands hintereinander angeordneten und benachbarten Längsfadenendenbereichen dem einfachen oder einem ganzzahligen Abstand von bzw. der Querstege außerhalb des Verbindungsbereichs der Saugbandenden entspricht. Beispielsweise sind zwei Querstege für zwei Längsfäden, mittels denen jeweils ein Längsfadenendenbereich aufgenommen wird und wobei die beiden Längsfadenendenbereiche von zwei verschiedenen Längsfäden in Längsrichtung des Saugbands benachbart hintereinander angeordnet sind, im doppelten bzw. dreifachen Abstand der Querstege außerhalb des Verbindungsbereichs ausgebildet, wobei zwischen den jeweils einen Längsfadenendenbereich aufnehmenden Querstegen weitere, im vorliegenden Beispiel ein bzw. zwei Querstege vorgesehen sind, die mit allen Längsfäden im Verbindungsbereich der Saugbandenden verbunden sind.

Bei einer Ausgestaltung des Saugbands ist es bevorzugt, dass in einem Verbindungsbereich der Saugbandenden die Längsfäden aufweisenden Saugbandenden querstegfrei gegenüberliegend und in Längsrichtung des Saugbands hintereinander, vorzugsweise fluchtend, ausgerichtet sind, und vorzugweise in Längsrichtung versetzt sind, so dass die Enden der einander gegenüberliegenden Längsfäden jeweils einen Längsfadenendenbereich bilden, und wobei die Längsfadenbereiche von zwei benachbarten Längsfäden in Längsrichtung versetzt angeordnet sind, wobei in Längsrichtung des Saugbands zwischen zwei auszubildenden oder ausgebildeten Querstegen jeweils ein Längsfadenendenbereich eines ersten Längsfadens aufgenommen ist, und wobei die zum Längsfadenendenbereich des ersten Längsfadens benachbarten Querstege mit jeweils wenigstens einem weiteren, vorzugsweise im Bereich des Längsfadenendenbereichs des ersten Längsfadens unterbrechungsfreien, benachbarten Längsfaden verbunden sind.

Außerdem zeichnet sich eine alternative Lösung der Aufgabe bzw. eine Weiterbildung des Saugbands dadurch aus, dass wenigstens ein oder mehrere Querstege wenigstens eine oder mehrere Verdickungen aufweisen. Hierbei ist beispielsweise vorgesehen, dass die Querstege des Saugbands endseitig eine Verbreiterung oder Verdickung aufweisen, wodurch die Gebrauchseigenschaften des Saugbands verbessert werden, da aufgrund der auftretenden Zugkräfte im Gebrauch des Saugbands aufgrund der Verdickung das Saugband an den Stellen der Querstege verstärkt ist, die einer verstärkten Beanspruchung oder einem höheren Verschleiß unterliegen.

Dabei ist weiterhin vorgesehen, dass eine oder die Verdickungen der Querstege sich in der durch die Längsfäden ausgebildeten Ebene, die auch als Monolage bezeichnet ist, erstrecken. Dadurch wird erreicht, dass die Querstege in der Höhe nicht variieren, während die Breite der Querstege in Längsrichtung des Saugbandes aufgrund der Verdickungen unterschiedlich ist. Hierbei sind beispielsweise die Verdickungen endseitig an den Querstegen möglich.

Darüber hinaus zeichnet sich eine Ausführungsform des Saugbands dadurch aus, dass wenigstens ein Quersteg oder mehrere Querstege an beiden seitlichen Enden, d.h. an den jeweiligen Kopfenden, jeweils eine Verdickung aufweisen.

Ferner ist bei dem Saugband weiterhin vorgesehen, dass wenigstens ein Quersteg oder mehrere Querstege an einem oder an beiden seitlichen Enden, d.h. an den beiden Kopfenden, eine T-förmige Verdickung aufweisen, wobei der Querbalken der T-förmigen Verdickung sich in Längsrichtung des Saugbands erstreckt.

Darüber hinaus ist im Rahmen der Erfindung vorgesehen, dass der Quersteg oder die Querstege eine L-förmige Verdickung an den Enden aufweisen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische teilweise Schnittdarstellung eines Saugstrangförderers einer Maschine der Tabak verarbeitenden Industrie in einer Seitenansicht;
- Fig. 2: schematisch eine perspektivische Ansicht eines Saugbands für einen Saugstrangförderer in einer perspektivischen Darstellung;
- Fig. 3a: schematisch den Verbindungsbereich von zwei Saugbandenden eines Saugbands;
- Fig. 3b: schematisch den Verbindungsbereich der Saugbandenden;
- Fig. 4a, 4b, 4c: jeweils schematisch den Verbindungsbereich von Saugbandenden eines Saugbands mit verschiedenen Anordnungen von Längsfadennahtstellen;
- Fig. 5: schematisch einen Verbindungsbereich von zwei Saugbandenden eines Saugbands gemäß einem weiteren Ausführungsbeispiel und
- Fig. 6: schematisch eine Draufsicht und eine Seitenansicht eines Saugbandes gemäß einem weiteren Ausführungsbeispiel.

In den Zeichnungen sind jeweils gleiche oder gleichartige Elemente und/oder Teile mit denselben Bezugsziffern versehen, so dass von einer erneuten Vorstellung jeweils abgesehen wird.

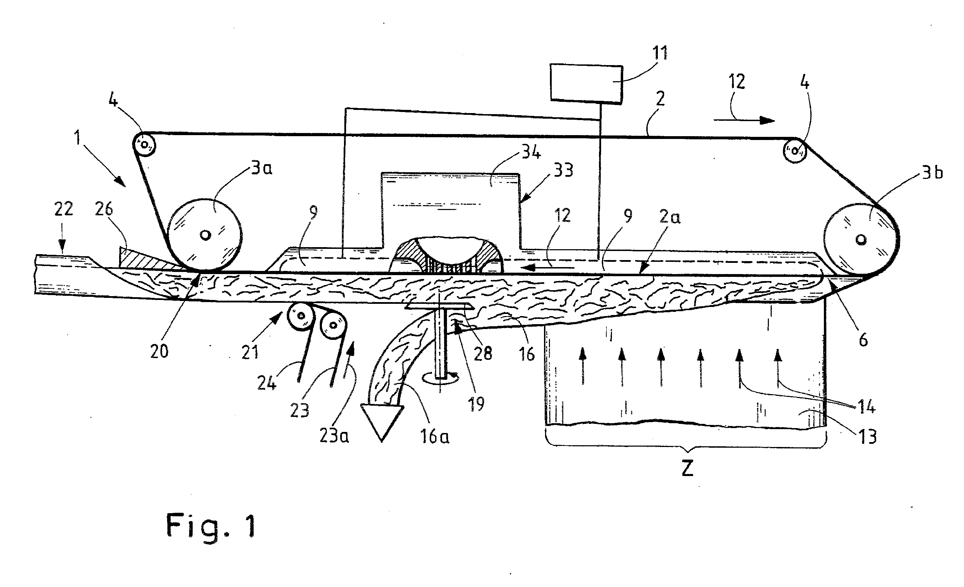

Fig. 1 zeigt eine schematische teilweise Schnittdarstellung eines erfindungsgemäßen Saugstrangförderers 1. Der Saugstrangförderer 1 ist in einer Seitenansicht dargestellt. Der Saugstrangförderer 1 ist Teil einer Zigarettenstrangmaschine oder Filterstrangmaschine der Tabak verarbeitenden Industrie.

Als förderndes Element ist ein luftdurchlässiges Saugband 2 vorgesehen, z.B. ein perforiertes Band oder ein luftdurchlässiges Gewebeband, das um eine vordere und eine hintere Umlenkrolle 3a bzw. 3b sowie um Führungsrollen 4 umläuft. Das untere Trum 2a des Saugbands 2 ist in einem Faserkanal 6 teilweise mit entsprechend der gewünschten Kontur des fertigen Strangs luftdurchlässigen Boden geführt. Der Faserkanal 6 verläuft geradlinig in einem Führungskörper.

Im Rahmen der Erfindung wird unter einem Saugband 2 auch ein Strangförderband oder Förderband verstanden.

Dem im Faserkanal 6 geführten Saugband 2 ist rückseitig bzw. innenseitig eine Unterdruckkammer 9 zugeordnet, die mit einer Unterdruckquelle 11 verbunden ist und durch den luftdurchlässigen Kanalboden sowie durch das luftdurchlässige Saugband 2 einen Saugzug bewirkt. Das Saugband 2 läuft in Richtung des Pfeils 12 um.

Die Mündung eines Förderschachts 13 zur Förderung von Fasern bzw. einem Gemisch aus Fasern und weiteren Bestandteilen eines Tabak- oder Filterstrangs, durch den aus einem nicht dargestellten Verteiler aufgelockerte bzw. vereinzelte Fasern in Richtung der Pfeile 14 dem Saugband 2 zugeführt werden, definiert eine Strangaufbauzone Z, in welcher der Faserstrang 16 bis zu seiner vollen Höhe aufgeschauert wird. Der Förderschacht 13 kann das Ende eines Fließbettförderers oder ein Saugschacht sein.

Die Unterdruckkammer 9 erstreckt sich über nahezu die ganze Länge des Faserkanals 6 und ist quer zur Förderrichtung des Saugbands 2 wenigstens einem Teil des Saugbands 2 zugeordnet, wobei quer zur Förderrichtung des Saugbands 2 die Unterdruckkammer 9 nicht ganz so weit reicht wie das Saugband 2 breit ist.

Es kann allerdings auch vorgesehen sein, dass der Saugkanal bzw. die Unterdruckkammer 9 in der Breite bzw. quer zur Förderrichtung des Saugbands 2 das vollständige Saugband abdeckt. Damit das Saugband 2 nicht in die Unterdruckkammer 9 gesaugt wird, ist der luftdurchlässige Boden des Führungskörpers mit Saugluftschlitzen bzw. -öffnungen vorgesehen. Der Boden ist beispielsweise perforiert. Es kann auch gemäß der DE 36 27 057 A1 vorgesehen sein, mehrere Unterdruckkammern vorzusehen, die beispielsweise Seitenstreifen des Saugbands getrennt von dem Mittelstreifen mit Saugluft beaufschlagen, wobei der Unterdruck entsprechend vorgebbar gesteuert werden kann.

Stromabwärts der Strangaufbauzone Z ist eine Überschussabnahmeeinrichtung 19 angeordnet, die überschüssigen Tabak 16a vom Tabakstrang 16 abnimmt. Die Überschussabnahmeeinrichtung 19 wird auch als Trimmer bezeichnet und umfasst beispielsweise ein oder zwei Kreismesser 28, die rotierend ausgebildet sind und deren Schneidkreise sich zur Überschussabnahme im Strangbereich berühren. Vorzugsweise sind die Kreismesser 28 so ausgebildet bzw. angeordnet, dass sie dem Faserstrang bei der Überschussabnahme eine wenigstens einem Teil der gewünschten Strangkontur des fertigen Strangs wenigstens angenähert entsprechende Querschnittskontur geben. Entsprechende Ausführungsformen sind beispielsweise in DE 36 27 057 A1 dargestellt.

Das Abgabeende 21 des Saugbands 2 bzw. des Faserkanals 6 liegt oberhalb des Papiereinlaufs einer Formateinrichtung 22, in der der Faserstrang mit einem in Pfeilrichtung 23a zugeführten Hüllmaterialstreifen 23, beispielsweise einem Zigarettenpapierstreifen oder einem Filterpapierstreifen, umhüllt wird. Ein umlaufendes Formatband 24 fördert den Hüllmaterialstreifen 23 und den auf diesem abgelegten Faserstrang 16 unter einen Einlauffinger 26 hindurch in die Formatvorrichtung 22, wobei die durch den Boden des Faserkanals vorgeformte Strangkontur den Strangeinlauf in die Formatvorrichtung und die Umhüllung erleichtert, weil geringere Verformungskräfte aufgebracht werden müssen.

Der Faserstrang 16 wird nach der Überschussabnahme im Einlaufbereich der Formatvorrichtung vorteilhaft auf einem bereits zu einer Mulde geformten Hüllmaterialstreifen abgelegt, sodass die Querschnittskontur, die er bei der Überschussabnahme erhalten hat, weitgehend erhalten bleibt und den Einlauf in die Formatvorrichtung durch Verringerung der aufzubringenden Verformungsarbeit erleichtert.

Die Unterdruckkammer 9 endet oberhalb des Einlaufbereichs der Formatvorrichtung 22. Diese kann sich allerdings bis zur Umlenkrolle 3a bzw. bis zur in Förderrichtung stromaufwärtigen Kante des Einlauffingers 26, also bis zum Ablösebereich 20 erstrecken. Die Umlenkrolle 3a kann auch als Pressrolle ausgebildet sein.

Außerdem ist in Fig. 1 ein Verdichtungsmittel 33 dargestellt, das beispielsweise aus einer nicht dargestellten rotierenden Steuerscheibe, die in einer nicht dargestellten zylindrischen Aufnahme im Gehäuse 34 drehbar gelagert ist, bestehen kann und dazu dient, verdichtete Abschnitte im Strang vorzusehen. Nähere Erläuterungen zur Verdichtungsvorrichtung 33 sind auch aus DE 36 27 057 A1 zu entnehmen.

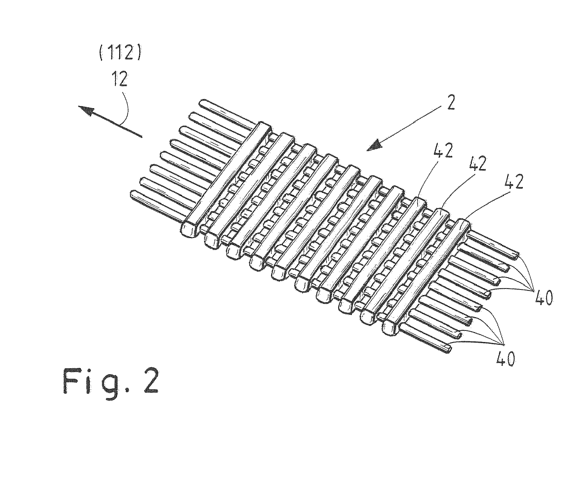

In Fig. 2 ist ein Saugband 2 für einen Saugstrangförderer 1 (vgl. Fig. 1) ausschnittsweise in einer perspektivischen Darstellung jeweils dargestellt. Das Saugband 2 verfügt über eine luftdurchlässige Struktur, die aus nebeneinander angeordneten Längsfäden 40 und senkrecht zu den Längsfäden 40 ausgebildeten Querstegen 42 (vgl. Fig. 2) gebildet ist. Hierbei sind die Querstege 42 in Förderrichtung 12 des Saugbands bzw. in Längsrichtung 112 des Saugbands 2 parallel zueinander und in äquidistanten Abständen angeordnet.

Die Längsfäden 40 des Saugbands 2 verlaufen in Längsrichtung des Saugbands 2, wobei die Querstege 42 in Querrichtung als segmentartige Blöcke oder als Quernocken an den Längsfäden 40 angeordnet sind und mit den Längsfäden 40 mindestens an einen oder mehreren bzw. allen Kreuzungspunkten bzw. Verbindungsbereichen, miteinander verbunden sind. Hierbei sind die blockartigen oder nockenartigen Querstege 42 mit den monolagig angeordneten Längsfäden 40 wirkverbunden, insbesondere kraftschlüssig und/oder formschlüssig verbunden.

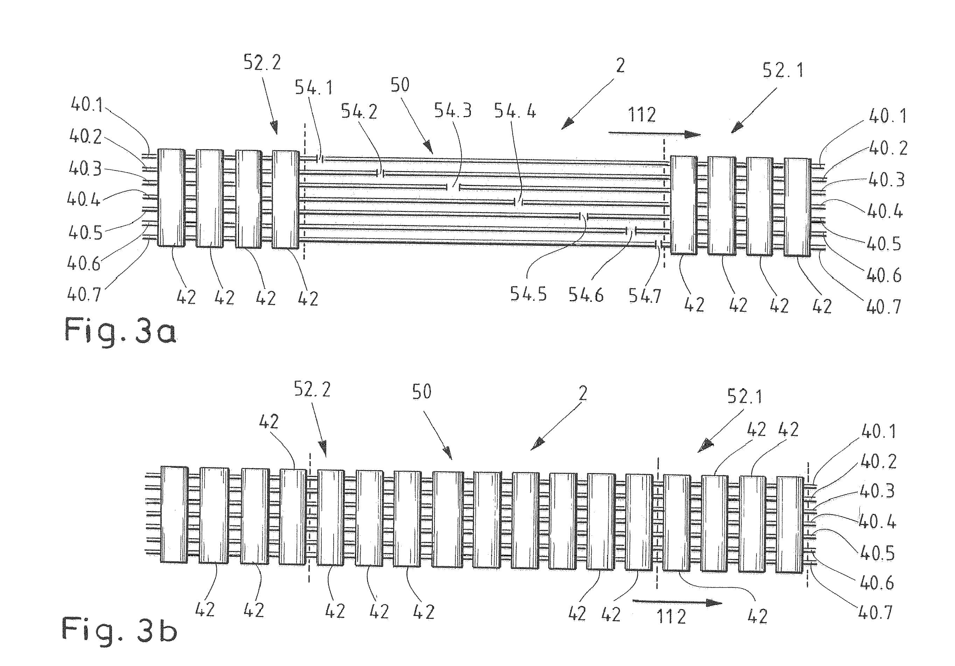

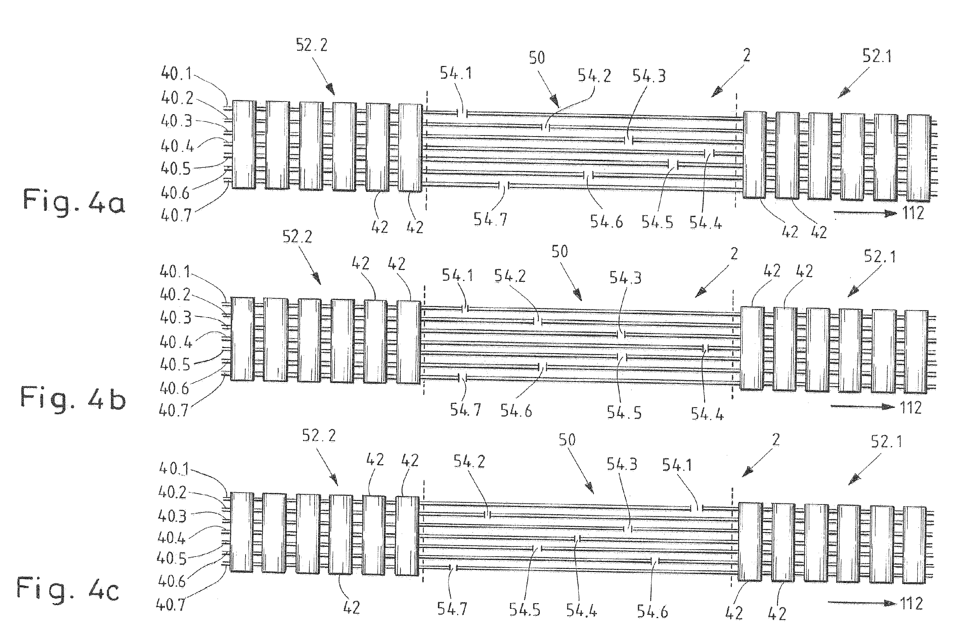

In Fig. 3a ist ein Verbindungsbereich 50 der beiden querstegfreien Saugbandenden 51.1, 51.2 des Saugbandes 2 dargestellt. Das Saugband 2 weist bei dem Ausführungsbeispiel in Fig. 3a bzw. 4a bis 4c sieben Längsfäden 40.1 bis 40.7 auf, wobei die Längsfäden 40.1 bis 40.7 im Verbindungsbereich 50 miteinander verbunden werden.

In den Fig. 3a, Fig. 4a bis 4c sind die Enden der Längsfäden 40.1 bis 40.7 jeweils zur schematischen Verdeutlichung mit einem Querstrich versehen, wobei in der Praxis die Enden der Längsfäden 40.1 bis 40.7 nicht T-förmig oder auf andere Weise verbreitert sind.

Die Enden der Längsfäden 40.1 bis 40.7 an den beiden Saugbandenden 52.1, 52.2 sind hierbei jeweils unterschiedlich lang, wobei jeweils ein Ende der Längsfäden 4.1 bis 40.7 des Saugbandendes 52.1 dem jeweiligen anderen Ende des Längsfadens 40.1 bis 40.7 des zweiten Saugbandendes 52.2 gegenüber voneinander angeordnet ist, wobei durch die paarweise Anordnung der Enden des jeweiligen Längsfadens 40.1 bis 40.7 im Verbindungsbereich 50 jeweils einen Längsfadenendenbereich 54.1 bis 54.7 ausgebildet ist.

Hierbei sind die Enden der Längsfäden 40.1 bis 40.7 im Verbindungsbereich 50 gegenüberliegend voneinander und axial fluchtend zueinander, beispielsweise in einem Spritzgussformwerkzeug, angeordnet. In den Längsfadenendenbereichen 54.1 bis 54.7 sind hierbei die Enden der Längsfäden 40.1 bis 40.7 jeweils voneinander beabstandet angeordnet.

Insgesamt ist die Länge aller Längsfäden 40.1 bis 40.7 konstant, wobei die gleich langen Längsfäden 40.1 bis 40.7 parallel zueinander angeordnet sind und die Enden der Längsfäden 40.1 bis 40.7 bezogen auf die Längsrichtung 112 versetzt nacheinander angeordnet sind.

Bei dem Ausführungsbeispiel in Fig. 3a sind die Enden der Längsfäden 40.1 bis 40.7 in Bezug auf die Längsrichtung 112 des Saugbands 2 hintereinander angeordnet. Im Bereich der Längsfadenendenbereiche 54.1 bis 54.7 wird jeweils durch Ausbilden eines Querstegs 42, beispielsweise durch Einbringen einer fließfähigen Masse in das Spritzgusswerkzeug, die Enden eines Längsfadens 40.1 bis 40.7 umspritzt, so dass bei der Ausbildung jeweils eines Querstegs im Bereich des Verbindungsbereichs 50 jeweils ein Quersteg die beiden Enden eines Längsfadens 40.1 bis 40.7 im Bereich der jeweiligen Längsfadenendenbereiche 54.1 bis 54.7 jeweils aufnimmt, während die neben einem Längsfadenendenbereich 54.1 bis 54.7 daneben angeordneten Längsfäden mit dem Quersteg verbunden sind.

Typischerweise hat der Verbindungsbereich 50 mit den gestaffelt versetzt zueinander angeordneten Längsfadenendenbereichen 54.1 bis 54.7 eine Länge von 5 cm bis 50 cm. Durch die Versetzung der nebeneinander ausgebildeten Längsfadenendenbereiche 54.1 bis 54.7 in Bezug auf die Längsrichtung 112 des Saugbandes 2 wird erreicht, dass der Verbindungsbereich 50 eine hohe Reißfestigkeit aufweist.

In Fig. 3b ist eine Draufsicht auf ein Saugband 2 im Ausschnitt gezeigt, wobei das Saugband 2 als geschlossenes, endloses Saugband infolge der Verbindung der Enden der Längsfäden 40.1 bis 40.7 geschlossen ausgebildet ist. Nach der Ausbildung der Querstege 42 sind die Enden der Längsfäden 40.1 bis 40.7 bzw. die als Längsfadennahtstellen ausgebildeten Längsfadenendenbereiche 54.1 bis 54.7 jeweils in einem Quersteg aufgenommen.

In den Fig. 4a bis 4c sind jeweils Ansichten des Verbindungsbereichs 50 der Saugbandenden 52.1, 52.2 gemäß verschiedenen Ausführungsformen dargestellt.

Hierbei ist gemäß dem Ausführungsbeispiel in Fig. 4a vorgesehen, dass die Längsfadenendenbereiche 54.1 bis 54.7 der jeweiligen Längsfäden 40.1 bis 40.7 bezogen auf die Längsrichtung 112 zickzack-förmig angeordnet sind, wobei der Abstand zwischen zwei benachbarten Längsfadenendenbereichen 54.1 bis 54.7 (in Bezug auf die Längsrichtung 112) abnimmt. Die Anordnung der Längsfadenendenbereiche 54.1 bis 54.7 gemäß dem Ausführungsbeispiel Fig. 4a kann auch als V-förmig bezeichnet werden, wobei die Längsfadenendenbereiche 54.1 bis 54.7 asymmetrisch angeordnet sind.

Bei dem in Fig. 4b gezeigten schematischen Ausführungsbeispiel sind die Längsfadenendenbereiche 54.1 bis 54.7 symmetrisch in Bezug auf den mittleren Längsfaden 40.4 angeordnet, so dass jeweils ein Paar an Längsfadenendenbereichen 54.1 bis 54.7 bei Verbinden der Saugbandenden 52.1, 52.2 in einem Quersteg aufgenommen sind. Der Längsfadenendenbereich 54.4 des mittleren (und bezogen auf die Längsrichtung 112 vorderen) Längsfadens 40.4 wird nur in einem Quersteg aufgenommen.

Bei der in Fig. 4c dargestellten Ausführungsform des Saugbands sind die Längsfadenendenbereiche 54.1 bis 54.7 quer zur Längsrichtung 112 des Saugbands 2 zickzack-förmig angeordnet, wobei bei der Ausbildung bzw. beim Bilden des geschlossenen Saugbands 2 jeweils ein Längsfadenendenbereich 54.1 bis 54.7 von einem Quersteg aufgenommen wird.

Im Rahmen der Erfindung sind zur Verbindung der Saugbandenden 52.1, 52.2 auch weitere hier nicht dargestellte Anordnungen der Längsfadenendenbereiche 54.1 bis 54.7 denkbar.

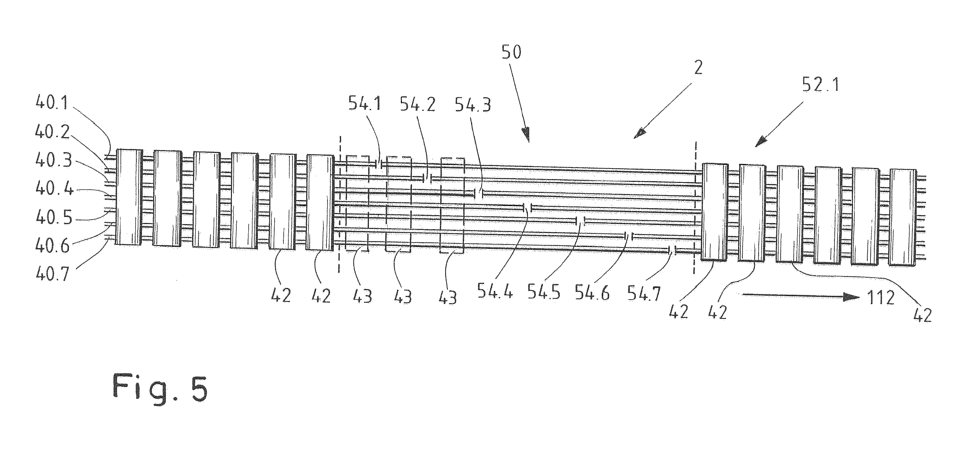

Bei dem in Fig. 5 schematisch gezeigten Ausführungsbeispiel für die Verbindung von zwei Saugbandenden 52.1, 52.2 des Saugbands 2 sind die Längsfadenendenbereiche 54.1 bis 54.7, wie auch in Fig. 3a gezeigt, als Diagonale quer zur Längsrichtung 112 des Saugbands 2 gestaffelt hintereinander angeordnet. Um die Enden der Längsfäden 40.1 bis 40.7 bzw. die Saugbandenden 52.1, 52.2 zu verbinden, werden Querstege 43 im Verbindungsbereich 50 ausgebildet, wobei die Längsfadenendenbereiche 54.1 bis 54.7 jeweils beidseits der Enden der Längsfäden 40.1 bis 40.7 mit den Querstegen 43 verbunden sind, wobei zwischen zwei benachbarten Querstegen 43 jeweils ein Längsfadenendenbereich 54.1 bis 54.7 ausgebildet ist, wobei die freien Enden der Längsfäden 40.1 bis 40.7 im jeweiligen Längsfadenendenbereich 54.1 bis 54.7 nicht in einem Quersteg 43 aufgenommen werden oder sind.

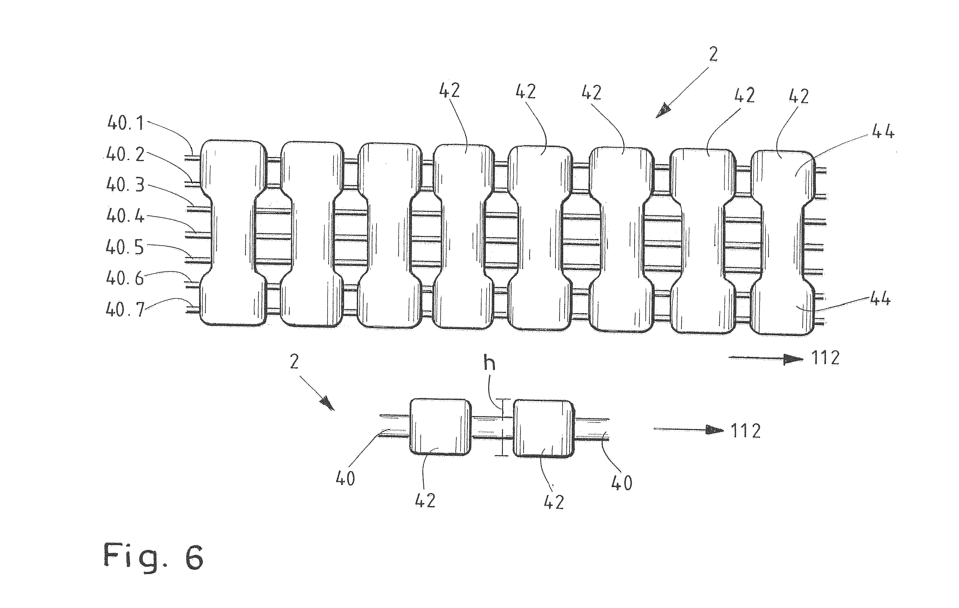

In Fig. 6 ist im oberen Bereich eine Draufsicht auf ein Saugband 2 im Ausschnitt dargestellt, wobei die Querstege 42 des Saugbandes 2 an den beiden seitlichen Kopfenden T-förmige Verbreiterungen 44 in Richtung der Längsrichtung 112 aufweisen, so dass sich eine knochenartige Struktur der Querstege 42 ergibt. Im unteren Bereich von Fig. 6 ist eine Seitenansicht auf das Saugband 2 im Ausschnitt gezeigt, wobei die Höhe h der Querstege 42 konstant ist. Durch die kopfseitigen Verbreiterungen 44 bzw. Verdickungen der Querstreben 42 wird die Verschleißbeständigkeit der Querstreben 42 beim Gebrauch des Saugbandes 2 an den Außenseiten der Querstreben 42 signifikant erhöht.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 1: Saugstrangförderer
- 2: Saugband
- 2a: unteres Trum
- 3a: Umlenkrolle
- 3b: Umlenkrolle
- 4: Führungsrolle
- 6: Faserkanal
- 9: Unterdruckkammer
- 11: Unterdruckquelle
- 12: Förderrichtung
- 13: Förderschacht
- 14: Faserförderrichtung
- 16: Faserstrang
- 16a: überschüssige Fasern
- 19: Überschussabnahmevorrichtung
- 20: Ablösebereich
- 21: Abgabeende
- 22: Formatvorrichtung
- 23: Hüllmaterialstreifen
- 23a: Pfeilrichtung
- 24: Formatband
- 26: Einlauffinger
- 28: Kreismesser
- 33: Verdichtungsvorrichtung
- 34: Gehäuse
- 40, 40.1 bis 40.7: Längsfaden
- 42: Quersteg
- 43: Quersteg
- 44: Verbreiterung
- 50: Verbindungsbereich
- 52.1, 52.2: Saugbandende
- 54.1 bis 54.7: Längsfadenendenbereich
- 112: Längsrichtung

- h: Höhe

## Patentansprüche

1. Verfahren zum Herstellen eines Saugbands (2) einer Maschine der Tabak verarbeitenden Industrie, insbesondere Strangmaschine, weiter vorzugsweise Filterstrangmaschine, wobei ein Saugband (2) vorbestimmter Länge mit Längsfäden (40, 40.1 bis 40.7) und mit an den Längsfäden (40, 40.1 bis 40.7) angeordneten, vorzugsweise separaten, Querstegen (42) und mit zwei freien Saugbandenden (52.1, 52.2) bereitgestellt wird, wobei die Längsfäden (40, 40.1 bis 40.7) des Saugbands (2) nebeneinander, vorzugsweise parallel nebeneinander, in Längsrichtung (112) angeordnet sind und die, insbesondere blockartigen, Querstege (42) quer, insbesondere senkrecht, zur Längsrichtung (112) der Längsfäden (40, 40.1 bis 40.7) in der durch die Längsfäden (40, 40.1 bis 40.7) gebildeten Ebene angeordnet sind, wobei die Querstege (42) jeweils mit mehreren Längsfäden (40, 40.1 bis 40.7) wirkverbunden, insbesondere kraftschlüssig und/oder formschlüssig verbunden, sind, **dadurch gekennzeichnet, dass** in einem Verbindungsbereich der Saugbandenden (52.1, 52.2) die Längsfäden (40, 40.1 bis 40.7) aufweisenden Saugbandenden (52.1, 52.2) querstegfrei gegenüberliegend und in Längsrichtung (112) des Saugbands (2) hintereinander, vorzugsweise fluchtend, ausgerichtet sind oder werden, und vorzugsweise in Längsrichtung versetzt sind, so dass die Enden der einander gegenüberliegenden Längsfäden (40, 40.1 bis 40.7) jeweils einen Längsfadenendenbereich (54.1 bis 54.7) bilden, und wobei die jeweils einander gegenüberliegenden Enden der Längsfäden (40, 40.1 bis 40.7) des Längsfadenendenbereich (54.1 bis 54.7) oder der Längsfadenendenbereiche (54.1 bis 54.7) paarweise mittels wenigstens eines oder mehrerer auszubildenden oder ausgebildeten Querstege (42) miteinander verbunden werden.

2. Verfahren nach Anspruch 1, **dadurch gekennzeichnet, dass** die Enden der einander gegenüberliegenden Längsfäden (40, 40.1 bis 40.7) im Längsfadenendenbereich (54.1 bis 54.7) jeweils eine Längsfadennahtstelle (54.1 bis 54.7) bilden, und wobei die jeweils einander gegenüberliegenden Enden der Längsfäden (40, 40.1 bis 40.7) der Längsfadennahtstelle (54.1 bis 54.7) oder der Längsfadennahtstellen (54.1 bis 54.7) paarweise mittels wenigstens eines oder mehrerer auszubildenden oder ausgebildeten Querstege (42) miteinander verbunden werden, und wobei bei der Ausbildung des Querstegs (42) oder der Querstege (42) die jeweils einander gegenüberliegenden freien Enden der Längsfäden (40, 40.1 bis 40.7), insbesondere jeweils eines Längsfadens, im Quersteg (42) oder in den Querstegen (42) aufgenommen sind oder werden.

3. Verfahren nach Anspruch 1 oder 2, **dadurch gekennzeichnet, dass** nach der Ausbildung eines Querstegs (42) im Verbindungsbereich der Saugbandenden (52.1, 52.2) mehrere Längsfadenendenbereiche (54.1 bis 54.7), insbesondere mehrere Längsfadennahtstellen, mit jeweils einander gegenüberliegenden Enden der Längsfäden (40, 40.1 bis 40.7) durch den ausgebildeten Quersteg aufgenommen sind.

4. Verfahren nach einem der Ansprüche 1 bis 3, **dadurch gekennzeichnet, dass** nach der Ausbildung von mehreren, in Längsrichtung (112) des Saugbands (2) voneinander beabstandeten Querstegen (42) jeweils wenigstens ein Längsfadenendenbereich (54.1 bis 54.7), insbesondere eine Längsfadennahtstelle (54.1 bis 54.7), oder mehrere Längsfadennahtstellen (54.1 bis 54.7), insbesondere mehrere Längsfadenendenbereiche (54.1 bis 54.7), durch die ausgebildeten Querstege (42) aufgenommen sind.

5. Verfahren nach einem der Ansprüche 1 bis 4, **dadurch gekennzeichnet, dass** nach der Ausbildung von mehreren Querstegen (42) im Verbindungsbereich ein Längsfadenendenbereich (54.1 bis 54.7), insbesondere eine Längsfadennahtstelle (54.1 bis 54.7), mit jeweils einander gegenüberliegenden Enden der Längsfäden (40, 40.1 bis 40.7) durch jeweils einen ausgebildeten Quersteg (42) aufgenommen ist.

6. Verfahren nach einem der Ansprüche 1 bis 5, **dadurch gekennzeichnet, dass** für die Verbindung der beiden Saugbandenden (52.1, 52.2) die Längsfadenendenbereiche (54.1 bis 54.7), insbesondere die Längsfadennahtstellen (54.1 bis 54.7), in Bezug auf die Längsrichtung (112) des Saugbands (2) wenigstens zwei oder mehr als zwei Längsfadenendenbereiche (54.1 bis 54.7), insbesondere Längsfadennahtstellen (54.1 bis 54.7), gestaffelt hintereinander angeordnet sind und/oder wenigstens mehr als zwei Längsfadenendenbereiche (54.1 bis 54.7), insbesondere mehr als zwei Längsfadennahtstellen (54.1 bis 54.7), vorzugsweise in Längsrichtung (112) des Saugbands (2) oder quer zur Längsrichtung (112) des Saugbands (2), zickzack-förmig oder, vorzugsweise in Längsrichtung (112) des Saugbands (2), V-förmig oder als Diagonale oder asymmetrisch zueinander angeordnet sind oder werden.

7. Verfahren nach einem der Ansprüche 1 bis 6, **dadurch gekennzeichnet, dass** für die Verbindung der Saugbandenden (52.1, 52.2) wenigstens zwei Längsfadenendenbereiche (54.1 bis 54.7), insbesondere wenigstens zwei Längsfadennahtstellen (54.1 bis 54.7), in Längsrichtung (112) des Saugbands (2) in einem Endenbereichabstand, insbesondere Nahtstellenabstand, hintereinander angeordnet sind, wobei der Endenbereichabstand, insbesondere Nahtstellenabstand, dem einfachen Abstand von zwei benachbarten Querstegen (42), vorzugsweise außerhalb des Verbindungsbereichs, oder einem n-fachen Abstand (n = 2, 3, 4, ...) von zwei benachbarten Querstegen (42), vorzugsweise außerhalb des Verbindungsbereichs, entspricht.

8. Verfahren nach einem der Ansprüche 1 bis 7, **dadurch gekennzeichnet, dass** in einem Verbindungsbereich der Saugbandenden (52.1, 52.2) die Längsfäden (40, 40.1 bis 40.7) aufweisenden Saugbandenden (52.1, 52.2) querstegfrei gegenüberliegend und in Längsrichtung (112) des Saugbands (2) hintereinander, vorzugsweise fluchtend, ausgerichtet sind oder werden, und vorzugsweise in Längsrichtung versetzt sind, so dass die Enden der einander gegenüberliegenden Längsfäden (40, 40.1 bis 40.7) jeweils einen Längsfadenendenbereich bilden, und wobei die Längsfadenendenbereiche von zwei benachbarten Längsfäden in Längsrichtung versetzt angeordnet sind, wobei in Längsrichtung des Saugbands zwischen zwei auszubildenden oder ausgebildeten Querstegen jeweils ein Längsfadenendenbereich eines ersten Längsfadens aufgenommen wird oder ist, und wobei die zum Längsfadenendenbereich des ersten Längsfadens benachbarten Querstege mit jeweils wenigstens einem weiteren, vorzugsweise im Bereich des Längsfadenendenbereichs des ersten Längsfadens unterbrechungsfreien, benachbarten Längsfaden verbunden sind.

9. Saugband (2) eines Saugstrangförderers einer Maschine der Tabak verarbeitenden Industrie, insbesondere Strangmaschine, weiter vorzugsweise Filterstrangmaschine, wobei das Saugband (2) in Längsrichtung (112) Längsfäden (40, 40.1 bis 40.7) aufweist, wobei an den Längsfäden (40, 40.1 bis 40.7) quer, insbesondere senkrecht, zur Längsrichtung (112) des Saugbands (2), vorzugsweise separate, Querstege (42) vorgesehen sind, wobei die Längsfäden (40, 40.1 bis 40.7) des Saugbands (2) nebeneinander, vorzugsweise parallel nebeneinander, in Längsrichtung (112) angeordnet sind und die, insbesondere blockartigen, Querstege (42) quer, insbesondere senkrecht, zur Längsrichtung (112) der Längsfäden (40, 40.1 bis 40.7) in der durch die Längsfäden (40, 40.1 bis 40.7) gebildeten Ebene angeordnet sind, wobei die Querstege (42) jeweils mit mehreren Längsfäden (40, 40.1 bis 40.7), insbesondere kraftschlüssig und/oder formschlüssig, verbunden sind, und wobei das Saugband (2) als geschlossenes, endloses Saugband (2) ausgebildet ist, **dadurch gekennzeichnet, dass** in einem Verbindungsbereich die Längsfäden (40, 40.1 bis 40.7) in Längsrichtung (112) des Saugbands (2) hintereinander, vorzugsweise paarweise fluchtend, ausgerichtet sind, so dass die einander gegenüberliegenden Enden der Längsfäden (40, 40.1 bis 40.7) jeweils einen Längsfadenendenbereich (54.1 bis 54.7) bilden, und wobei die jeweils einander gegenüberliegenden Enden der Längsfäden (40, 40.1 bis 40.7) der Längsfadenendenbereiche (54.1 bis 54.7) paarweise mittels eines Querstegs (42) oder mittels mehrerer ausgebildeter Querstege (42) miteinander verbunden sind.

10. Saugband (2) nach Anspruch 9, **dadurch gekennzeichnet, dass** die Enden der einander gegenüberliegenden Längsfäden (40, 40.1 bis 40.7) im Längsfadenendenbereich (54.1 bis 54.7) jeweils eine Längsfadennahtstelle (54.1 bis 54.7) bilden, und wobei die jeweils einander gegenüberliegenden Enden der Längsfäden (40, 40.1 bis 40.7) der Längsfadennahtstelle (54.1 bis 54.7) oder der Längsfadennahtstellen (54.1 bis 54.7) paarweise mittels wenigstens eines oder mehrerer auszubildenden oder ausgebildeten Querstege (42) miteinander verbunden sind, und wobei bei der Ausbildung des Querstegs (42) oder der Querstege (42) die jeweils einander gegenüberliegenden freien Enden der Längsfäden (40, 40.1 bis 40.7), insbesondere jeweils eines Längsfadens, im Quersteg (42) oder in den Querstegen (42) aufgenommen sind.

11. Saugband (2) nach Anspruch 9 oder 10, **dadurch gekennzeichnet, dass** im Verbindungsbereich der Saugbandenden (52.1, 52.2) mehrere Längsfadenendenbereiche (54.1 bis 54.7), insbesondere Längsfadennahtstellen (54.1 bis 54.7), durch den Quersteg (42) aufgenommen sind.

12. Saugband (2) nach einem der Ansprüche 9 bis 11, **dadurch gekennzeichnet, dass** in Längsrichtung (112) des Saugbands (2) voneinander beabstandete Querstege (42) jeweils wenigstens ein Längsfadenendenbereich (54.1 bis 54.7), insbesondere wenigstens eine Längsfadennahtstelle (54.1 bis 54.7), mit jeweils einander gegenüberliegenden Enden der Längsfäden (40, 40.1 bis 40.7) oder mehrere Längsfadenendenbereiche (54.1 bis 54.7), insbesondere Längsfadennahtstellen (54.1 bis 54.7), durch die Querstege (42) aufgenommen sind.

13. Saugband (2) nach einem der Ansprüche 9 bis 12, **dadurch gekennzeichnet, dass** in Längsrichtung (112) des Saugbands (2) voneinander beabstandete Querstege (42) jeweils ein Längsfadenendenbereich (54.1 bis 54.7), insbesondere eine Längsfadennahtstelle (54.1 bis 54.7), oder mehrere Längsfadenendenbereiche (54.1 bis 54.7), insbesondere Längsfadennahtstellen (54.1 bis 54.7), durch die Querstege (42) im Verbindungsbereich aufgenommen sind.

14. Saugband (2) nach einem der Ansprüche 9 bis 13, **dadurch gekennzeichnet, dass** im Verbindungsbereich der Saugbandenden (52.1, 52.2) jeweils ein Längsfadenendenbereich (54.1 bis 54.7), insbesondere eine Längsfadennahtstelle (54.1 bis 54.7), mit jeweils einander gegenüberliegenden Enden der Längsfäden (40, 40.1 bis 40.7) durch einen Quersteg (42) aufgenommen ist.

15. Saugband (2) nach einem der Ansprüche 9 bis 14, **dadurch gekennzeichnet, dass** im Verbindungsbereich der beiden Saugbandenden (52.1, 52.2) die Längsfadenendenbereiche (54.1 bis 54.7), insbesondere die Längsfadennahtstellen (54.1 bis 54.7), in Bezug auf die Längsrichtung (112) des Saugbands (2) wenigstens zwei oder mehr als zwei Längsfadenendenbereiche (54.1 bis 54.7), insbesondere Längsfadennahtstellen (54.1 bis 54.7), gestaffelt hintereinander angeordnet sind oder wenigstens mehr als zwei Längsfadenendenbereiche (54.1 bis 54.7), insbesondere Längsfadennahtstellen (54.1 bis 54.7), vorzugsweise in Längsrichtung (112) des Saugbands (2) oder quer zur Längsrichtung (112) des Saugbands (2), zickzackförmig oder, vorzugsweise in Längsrichtung (112) des Saugbands (2), V-förmig oder als Diagonale oder asymmetrisch zueinander angeordnet sind.

16. Saugband (2) nach einem der Ansprüche 9 bis 15, **dadurch gekennzeichnet, dass** zwei Längsfadenendenbereiche (54.1 bis 54.7), insbesondere zwei Längsfadennahtstellen (54.1 bis 54.7), in Längsrichtung (112) des Saugbands (2) in einem Endenbereichabstand, insbesondere Nahtstellenabstand, hintereinander angeordnet sind, wobei der Endenbereichabstand, insbesondere Nahtstellenabstand, dem einfachen Abstand von zwei benachbarten, vorzugsweise außerhalb des Verbindungsbereichs, angeordneten Querstegen (42) oder einem n-fachen Abstand (n = 2, 3, 4, ...) von zwei benachbarten Querstegen (42) entspricht.

17. Saugband (2) nach einem der Ansprüche 9 bis 16, **dadurch gekennzeichnet, dass** in einem Verbindungsbereich der Saugbandenden (52.1, 52.2) die Längsfäden (40, 40.1 bis 40.7) aufweisenden Saugbandenden (52.1, 52.2) querstegfrei gegenüberliegend und in Längsrichtung (112) des Saugbands (2) hintereinander, vorzugsweise fluchtend, ausgerichtet sind, und vorzugweise in Längsrichtung versetzt sind, so dass die Enden der einander gegenüberliegenden Längsfäden (40, 40.1 bis 40.7) jeweils einen Längsfadenendenbereich bilden, und wobei die Längsfadenbereiche von zwei benachbarten Längsfäden in Längsrichtung versetzt angeordnet sind, wobei in Längsrichtung des Saugbands zwischen zwei auszubildenden oder ausgebildeten Querstegen jeweils ein Längsfadenendenbereich eines ersten Längsfadens aufgenommen ist, und wobei die zum Längsfadenendenbereich des ersten Längsfadens benachbarten Querstege mit jeweils wenigstens einem weiteren, vorzugsweise im Bereich des Längsfadenendenbereichs des ersten Längsfadens unterbrechungsfreien, benachbarten Längsfaden verbunden sind.

18. Saugband (2) gemäß dem Oberbegriff des Anspruch 9 oder nach einem der Ansprüche 9 bis 17, **dadurch gekennzeichnet, dass** wenigstens ein oder mehrere Querstege (42) wenigstens eine oder mehrere Verdickungen aufweisen.

19. Saugband (2) nach Anspruch 18, **dadurch gekennzeichnet, dass** eine oder die Verdickungen der Querstege (42) sich in der durch die Längsfäden (40, 40.1 bis 40.7) ausgebildeten Ebene erstrecken.

20. Saugband (2) nach Anspruch 18 oder 19, **dadurch gekennzeichnet, dass** wenigstens ein Quersteg (42) oder mehrere Querstege (42) jeweils an beiden seitlichen Enden jeweils eine Verdickung aufweisen.

21. Saugband (2) nach einem der Ansprüche 18 bis 20, **dadurch gekennzeichnet, dass** wenigstens ein Quersteg (42) oder mehrere Querstege (42) an einem oder an beiden seitlichen Enden eine T-förmige Verdickung aufweisen.
